**Europäisches Patentamt**

**European Patent Office**

**Office européen des brevets**

(19)

(11) Veröffentlichungsnummer : **0 392 047 B1**

(12) **EUROPÄISCHE PATENTSCHRIFT**

(45) Veröffentlichungstag der Patentschrift :
**24.06.92 Patentblatt 92/26**

(51) Int. Cl.⁵ : **B29C 53/04,** B21D 5/04,
// B29L9:00

(21) Anmeldenummer : **89106495.8**

(22) Anmeldetag : **12.04.89**

(54) **Verfahren und Vorrichtung zum Heissverformen einer Kunstharz-Schichtpressstoffplatte.**

(43) Veröffentlichungstag der Anmeldung :
**17.10.90 Patentblatt 90/42**

(45) Bekanntmachung des Hinweises auf die
Patenterteilung :
**24.06.92 Patentblatt 92/26**

(84) Benannte Vertragsstaaten :
**AT BE CH DE ES FR GB IT LI NL SE**

(56) Entgegenhaltungen :
**EP-A- 0 141 604**
**WO-A-86/02314**
**AT-C- 349 766**
**DE-C- 2 823 669**

(56) Entgegenhaltungen :
**US-A- 3 009 201**
**US-A- 3 392 074**
**US-A- 4 334 947**
**US-A- 4 777 005**

(73) Patentinhaber : **Winkler, Karl**
**Industriestrasse 1+2**
**W-4408 Dülmen (DE)**

(72) Erfinder : **Winkler, Karl**
**Industriestrasse 1+2**
**W-4408 Dülmen (DE)**

(74) Vertreter : **Habbel, Hans-Georg, Dipl.-Ing.**
**Postfach 3429 Am Kanonengraben 11**
**W-4400 Münster (DE)**

Jouve, 18, rue Saint-Denis, 75001 PARIS

## Beschreibung

Die Erfindung bezieht sich auf ein Verfahren zum Heißverformen einer Kunstharz-Schichtpreßstoffplatte gemäß dem Oberbegriff des Hauptanspruches und auf eine Vorrichtung zum Biegen von heißverformbaren Kunstharz-Schichtpreßstoffplatten gemäß dem Oberbegriff des Anspruches 3.

Aus der AT-PS 349 766 ist ein Verfahren zum Verformen einer heißverformbaren Kunstharz-Schichtpreßstoffplatte bekannt. Bei diesem bekannten Verfahren wird der Biegebereich der Platte erhitzt und die Platte hierauf in einer Biegevorrichtung ggf. um einen Dorn gebogen. Hierbei verschieben sich die einzelnen Lamellen der Platte gegeneinander. Formhalteelemente halten dann das gebogene Bauteil so lange fest, bis der Thermoplast erstarrt ist.

Bei dieser bekannten Verfahrensweise wird ein Biegeknebel eingesetzt, der eine Biegeplatte trägt und der Biegeknebel wird um den Biegedorn geschwenkt, wobei die Biegeplatte relativ zur Oberfläche des abzuwinkelnden Plattenrandbereiches, mit der sie in ständigem flächigen Kontakt steht, eine Gleitbewegung ausführt. Diese großflächige Gleitbewegung ist unerwünscht. Da die Biegeplatte über ein Gleitfutter an der eigentlichen zu biegenden Platte anliegt, um so Beschädigungen der Plattenoberfläche zu vermeiden, kann dieses Biegeorgan die gebogene Platte auch nicht halten, bis diese Platte erstarrt ist. Es ist daher zusätzlich ein Formhalteorgan erforderlich, das einen Preßstempel mit konkaver zylindrischer Preßfläche aufweist, der nach dem Abbiegevorgang gegen die konvexe Oberfläche des gebogenen Plattenbereiches gedrückt wird. Dieser Preßstempel muß für jeden unterschiedlichen Biegeradius unterschiedlich ausgebildet sein. Das Verfahren und die Vorrichtung gemäß der AT-PS 349 766 wurde daher von der Patentinhaberin selbst als verbesserungswürdig angesehen.

Ein gattungsbildendes Verfahren ist aus der WO 86/02314 bekannt. Bei diesem bekannten Verfahren steht das Biegeorgan auch zumindest während eines großen Teiles des Abbiegevorganges mit dem abzuwinkelnden Platten-Randbereich in flächigem Kontakt. Hierdurch entsteht im eigentlichen Biegebereich der abzuwinkelnden Platte eine ungewollte Verschiebung der Schichten gegeneinander, da der Biegedruck erst weit von diesem eigentlichen Biegebereich entfernt aufgebracht wird.

Bei der aus der gattungsbildenden WO 86/02314 bekannten Vorrichtung ist das Preßorgan nur auf- und abbeweglich gelagert, so daß nur Abwinkelungen um 90° möglich sind, d. h. das Verfahren ist nur bei Platten anwendbar, deren Randkanten 90° abgewinkelt werden sollen.

Aus der US-A-33 92 074 ist es bekannt, auf einer Sperrholzunterlage eine Kunststoffschicht aufzuformen, um damit beispielsweise Küchenmöbel herzustellen.

Das Problem der Vielzahl von Lagen, wie sie bei einer Kunscharzschicht-Preßstoffplatte vorliegen und wie sie teilweise durch die Verfahrensweise gemäß der gattungsbildenden WO 86 02 314 gelöst sind, wird hier weder angeschnitten noch behandelt, sondern bei dieser Literaturstelle handelt es sich um eine Erläuterung eines im weitesten Umfang maschinell durchzuführenden Beschichtungsverfahrens.

Aus der US-PS 30 09 201 ist eine Biegemaschine bekanntgeworden, mit der thermoplastische Kunststoffplatten um entsprechend gerundete Formen gebogen werden können. Auch hier handelt es sich um einen Biegevorgang eines in seiner Schichtdicke einteiligen Werkstoffs und nicht um die Behandlung einer Schichtpreßstoffplatte aus Kunstharzlaminaten, d. h., bei der bekannten Arbeitsweise tritt das Problem einer ungewollten Verschiebung der Schichten gegeneinander nicht auf.

Der Erfindung liegt die Aufgabe zugrunde, die bekannte Verfahrensweise dahingehend zu verbessern, daß gleichmäßig während des gesamten Biegevorganges nicht nur der eigenclithe Biegedruck auf den abzubiegenden Platten-Randbereich aufgebracht wird, sondern während des Aufbringens dieses Biegedrucks gleichzeitig ein Zug auf die verschiedenen Laminatschichten in Richtung des freien Plattenrandes ausgeübt wird, so daß im eigenclichen Biegebereich eine straffe Spannung der Platte herbeigeführt wird.

Diese der Erfindung zugrundeliegende Aufgabe wird durch die Lehre des Hauptanspruches gelöst.

Vorteilhafte Ausgestaltungen dieses erfindungsgemäßen Verfahrens sind im Unteranspruch 2 erläutert

Der Erfindung liegt weiterhin die Aufgabe zugrunde, die gattungsbildende Vorrichtung dahingehend zu verbessern, daß jede beliebige Plattenabwinkelung erreichbar ist und in einem einzigen Arbeitsorgan die Anordnung untergebracht ist, die den Abbiegevorgang einleitet und durchführt, dabei gleichzeitig einen Zug auf die abzubiegenden Plattenschichten ausübt und gleichzeitig nach Durchführen des Abbiegevorganges einen flächigen Druck auf den abgebogenen Teil bewirkt.

Diese Aufgabe wird durch die Lehre des kennzeichnenden Teiles des Anspruches 3 gelöst.

Vorteilhafte Ausgestaltungen dieser Vorrichtung sind in den Unteransprüchen erläutert.

Ein Ausführungsbeispiel der Erfindung wird nachfolgend anhand der Zeichnungen beschrieben. Die Zeichnungen zeigen dabei in den

Fig. 1 bis 4 ein Biegeorgan während der Durchführung der Biegung, in

Fig. 5 eine abgeänderte Stellung des Biegeorgans, in den

2

Fig. 6 und 7 in wesentlich größerem Maßstab zur Verdeutlithung der Ausbildung der erfindungsgemäßen Vorrichtung im Bereich der Biegestelle.

In den Zeichnungen ist mit 1 eine zu biegende Kunstharz-Schichtpreßstoffplatte bezeichnet, die an sich bekannter Art ist und aus mehreren heißverformbaren Laminatschichten aufgebaut ist. Zwischen diesen Laminatschichten sind aus thermoplastischen Bindemitteln bestehende Schichten eingefügt.

Die Platte 1 liegt in einer Klemmvorrichtung 7, die eine obere Klemmfläche 8 und eine untere Klemmfläche 9 schafft, auf und steht in Richtung des Pfeiles $F_4$ mit ihrem freien abzubiegenden Platten-Randbereich 2 über die obere und untere Klemmfläche vor. Im Bereich einer gebogen ausgebildeten Gegenfläthe 4 soll die Platte 1 bei dem dargestellten Ausführungsbeispiel um etwa 45° abgebogen werden. Die untere Klemmfläche 9 setzt sich in eine sogenannte Gegendruckfläche 10 fort, die gelenkig bei 23 an die untere Klemmfläche 9 anschließt, so daß damit die Gegendruckfläche 10 in dem gewünschten Biegewinkel eingestellt werden kann.

Die obere Klemmfläche 8 ist über in der Zeichnung nicht dargestellte hydraulische, pneumatische und/oder mechanische Mittel fest auf die Platte 1 und damit auf die untere Klemmfläche 9 auflegbar und legt damit die zu bearbeitende Platte 1 fest.

Weiterhin ist ein Biegeorgan 3 vorgesehen, das im wesentlichen aus einem Preßstempel 5 besteht, der eine untere Druckfläche 11 aufweist und einer mit dem Preßstempel 5 einteilig ausgebildeten Druckwalze 6, die in vertikaler Richtung gesehen der Platte 1 benachbart ist, wobei in vertikaler Richtung sich an die Druckwalze 6 der Preßstempel 5 nach oben hin anschließt. Der Preßstempel 5 und die Druckwalze 6 können über eine hydraulische oder pneumatische Kolbenzylinderanordnung 18, die sich beispielsweise am Gehäuse des Biegeorganes 3 abstützt, in Richtung auf die Klemmvorrichtung 7 zubewegt werden, wobei sich vorzugsweise dann der Preßstempel 5 und die Druckwalze 6 über eine Führung 24 im Inneren des Gehäuses des Biegeorganes 3 führen. Die Zustellung erfolgt dabei schräg zur Fläche, damit bei Enddruck ein Zug auf die Kunststoffplatte entsteht.

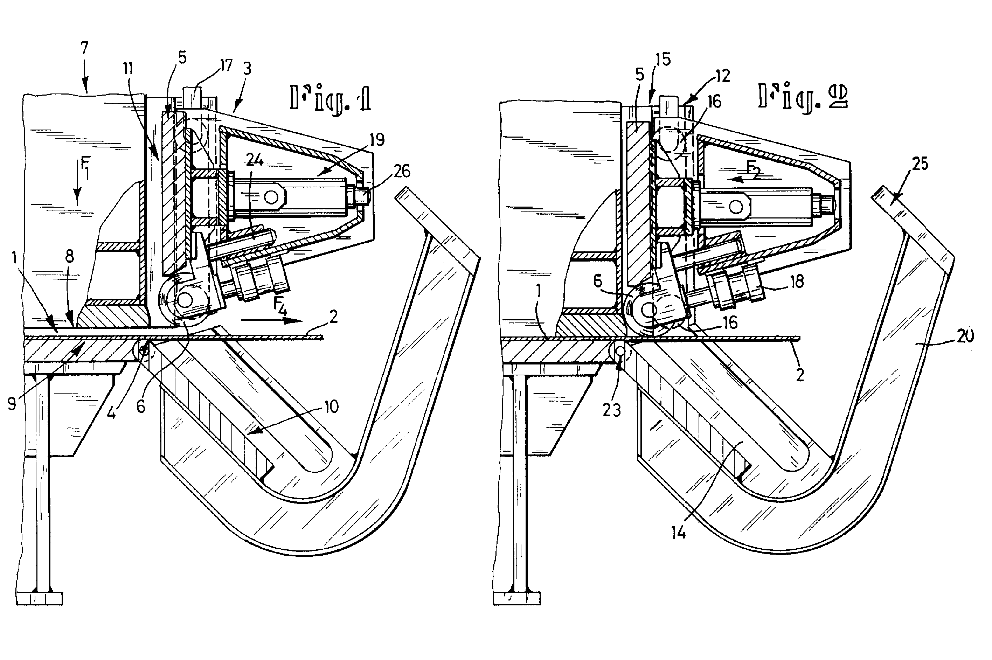

Das Biegeorgan 3 selbst führt sich in einer Schlittenführung 12, die zweiteilig ausgebildet ist, nämlich aus einem oberen Teil 15 und einem unteren Teil 14 besteht, wobei beide Teile gegeneinander abgewinkelt werden können, wie dies besonders deutlich Fig. 1 zeigt, dadurch, daß der untere Teil 14 der Schlittenführung 12 die Gegendruckfläche 10 trägt, die gelenkig bei 23 an der Klemmfläche 9 anschließt.

Der untere Teil 14 der Schlittenführung 12 weist dabei ein Gegenlager 20 auf, das die untere Schlittenführung umgibt und mit einer Gegendruckplatte 25 ausgerüstet ist, an die sich ein Druckkolben 26 einer hydraulischen Kolbenzylinderanordnung 19 anlegen kann, die im Inneren des Biegeorganes 3 angeordnet ist und die ebenfalls mit dem Preßstempel 5 in Verbindung steht.

Das Biegeorgan 3 weist Laufrollen 16 auf, mit denen es sich in der Schlittenführung 12 abstützt und führt, wobei das Biegeorgan 3 insgesamt mit einem Verbindungsteil 17 ausgerüstet ist, das zu einer Druckvorrichtung führt, durch die das Biegeorgan 3 auf- und abbewegt werden kann.

Die Wirkungs- und Arbeitsweise dieser Vorrichtung ist wie folgt:

In Fig. 1 steht die Vorrichtung in ihrer Ausgangsstellung, d.h. die Platte ist auf die untere Klemmfläche 9 aufgelegt, die obere Klemmfläche 8 ist noch nicht nach unten die Platte 1 festlegend bewegt und das Biegeorgan 3 steht in einer Ausgangsruhestellung.

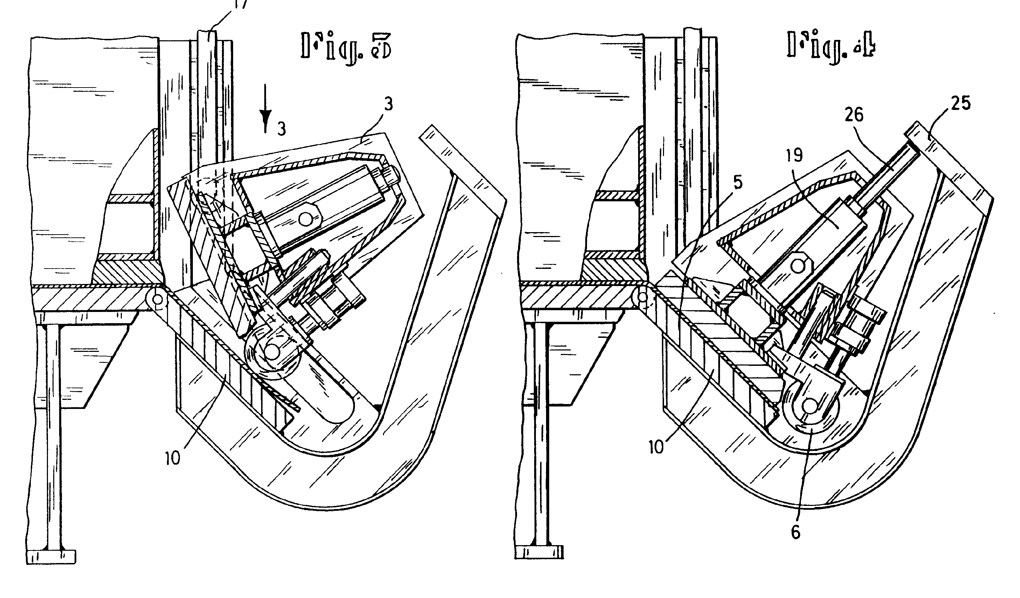

Fig. 2 zeigt, daß die obere Klemmfläche 8 in Richtung des Pfeiles $F_1$ in Fig. 1 nach unten bewegt worden ist und damit die Platte 1 festlegt und daß danach durch Betätigen der hydraulischen Kolbenzylinderanordnung 18 der Preßstempel 5 und die Druckwalze 6 nach vorne in Richtung des Pfeiles $F_2$ bewegt worden sind, so daß sich nunmehr die Druckwalze 6 ganz nahe am Biegebereich, d.h. der gebogenen Gegenfläthe 4, befindet. Die Druckwalze 6 erzeugt dabei eine Drucklinie, die sich quer zu dem abzubiegenden Platten-Randbereich 2, d. h. quer zur Richtung des Pfeiles $F_4$ erstreckt.

Gemäß Fig. 3 ist über das Verbindungsteil 17 ein Druck auf das Biegeorgan 3 ausgeübt worden, so daß sich dieses nach unten bewegt hat in Richtung des Pfeiles $F_3$ in Fig. 3. Dabei hat die Druckwalze 6 den noch in Fig. 2 frei überstehenden Platten-Randbereich 2 nach unten auf die Gegendruckfläche 10 gelegt, wobei dabei nicht nur ein Druck senkrecht zur Gegendruckfläche 10 ausgeübt wird, sondern gleichzeitig ein Zug auf den Platten-Randbereich 2 in Richtung zum freien Plattenrand hin ausgeübt wird.

Bei der Arbeitsstellung gemäß Fig. 4 ist das Abbiegen des freien Platten-Randbereiches 2 beendet und nunmehr ist durch Druckzugabe zur hydraulischen Kolbenzylinderanordnung 19 der Druckkolben 26 ausgefahren und hat sich gegen die Widerlagerfläche 25 angelegt und nunmehr wird ein entsprechender Preßdruck über den Preßstempel 5 auf die Oberfläche des abzubiegenden Platten-Randbereiches ausgeübt, und zwar so lange, bis die Platte in diesem Bereich erkaltet ist und die gewünschte Verfestigung der Kunstharz-Schichtpreßstoffplatte herbeigeführt ist.

Aus Fig. 4 ist dabei deutlich erkennbar, daß die Druckwalze 6 nunmehr keine Funktion ausübt, sondern frei steht.

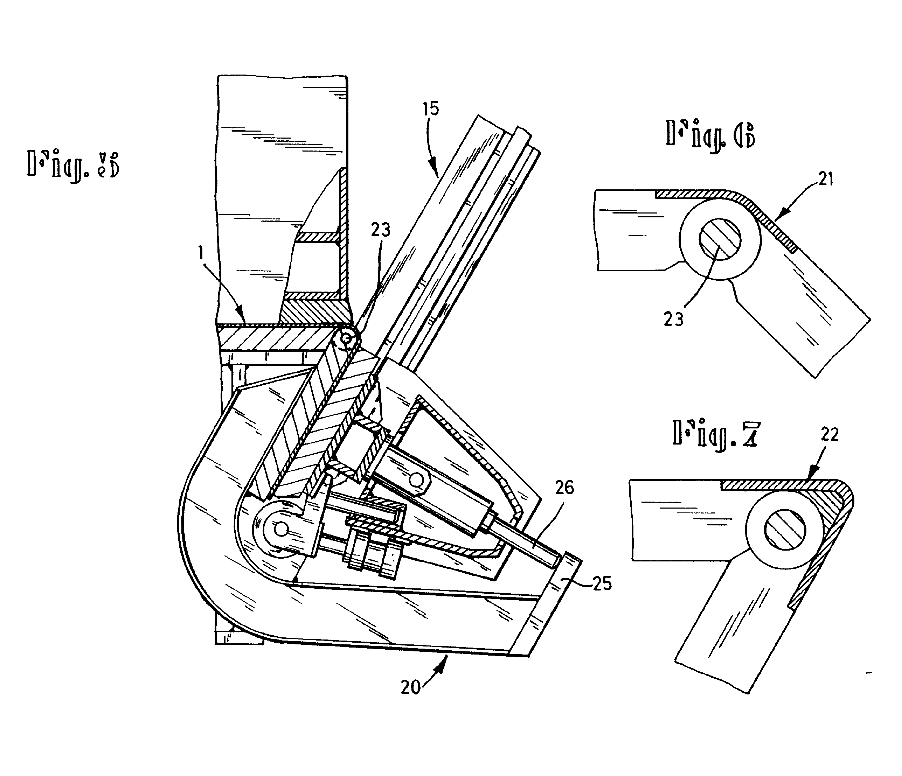

Aus der Darstellung in Fig. 5 ist erkennbar, daß durch die erfindungsgemäße Anordnung auch Abbiegewinkel erreichbar sind, die größer als 90° sind, d.h. zwischen den Unterseiten der Platte 1 und dem abzubiegenden Platten-Randbereich 2 besteht ein Winkel, der kleiner als 90° ist.

Fig. 6 zeigt ein Merkmal der erfindungsgemäßen Anordnung, nämlich derart, daß im Bereich der gebogenen Gegenfläche 4 Einsatzstücke 21 bzw. 22 eingesetzt werden, die an der Unterseite der Platte 1 im Bereich der Abbiegung anliegen und es ist erkennbar, daß nunmehr je nach Biegewinkel und Biegeradius unterschiedliche Einsatzstücke 21 und 22 vorrätig gehalten werden können, so daß ein Umrüsten der Maschine von einem Biegewinkel zum anderen schnell und problemlos durchgeführt werden kann.


**Patentansprüche**

1. Verfahren zum Heißverformen einer Kunstharz-Schichtpreßstoffplatte (1), welche aus mehreren heißverformbaren, mit duromeren Kunststoffen imprägnierten Laminatschichten aufgebaut ist, zwischen denen aus einem thermoplastischen Bindemittel bestehende Schichten eingefügt sind, bei welchem die Platte zunächst zumindest in ihrem zu verformenden Bereich auf Verformungstemperatur gebracht wird, hierauf zum Abwinkeln eines Platten-Randbereiches (2) mit Hilfe eines mit diesem Randbereich in Kontakt tretenden, beweglich geführten Biegeorgan (3) um eine gebogene Gegenfläche (4) derart gebogen wird, daß das Biegeorgan (3) zumindest während eines Teiles des Abbiegevorganges mit dem abzuwinkelnden Platten-Randbereich (2) in Kontakt steht und die Platte (1) dann abgekühlt wird, wobei das Biegeorgan (3) nach dem Abbiegevorgang zumindest bis zum Widererstarren des thermoplastischen Bindemittels den Randbereich (2) in seiner abgewinkelten Lage hält, dadurch gekennzeichnet, daß das Biegeorgan (3) in der ersten Phase des Abbiegevorganges so geführt wird, daß es dem abzuwinkelnden Platten-Randbereich im Bereich der gebogenen Gegenfläche (4) und gegen diese anpressend anliegt, auf den abzuwinkelnden Platten-Randbereich (2) eine sich parallel zu der gebogenen Gegenfläche erstreckende Drucklinie erzeugt wird, und diese Drucklinie während des Abbiegevorganges über den abzuwinkelnden Platten-Randbereich in Richtung zum freien Platten-Randbereich (2) hin geführt wird und erst bei Erreichen der Endstellung des abzuwinkelnden Platten-Randbereiches (2) auf den abgewinkelten Platten-Randbereich (2) ein in seiner Größe dem abgewinkelten Platten-Randbereich entsprechender Preßstempel (5) aufgepreßt wird, der den abgewinkelten Platten-Randbereich (2) bis zum Wiedererstarren des thermoplastischen Bindemittels mit Druck beaufschlagt.

2. Verfahren nach Anspruch 1, dadurch gekennzeichnet, daß die auf den abzuwinkelnden Platten-Randbereich (2) aufzubringende Drucklinie durch eine mit dem Biegeorgan (3) verbundene Druckwalze (6) erzeugt wird, die sich auf der Oberfläche des abzuwinkelnden Platten-Randbereiches (2) abwälzen kann.

3. Vorrichtung zum Biegen von heißverformbaren Kunstharz-Schichtpreßstoffplatten, die eine zum Festhalten der unverformten Platte dienende Klemmvorrichtung (7) mit ebenen Klemmflächen aufweist, wobei die untere ebene Klemmfläche (9) über eine gebogene Gegenfläche (4) in eine gegenüber der unteren Klemmfläche (9) abgewinkelte Gegendruckfläche (10) übergeht sowie ein über eine Halterung verschieblich gelagertes, eine Druckfläche (11) und eine Druckwalze (6) aufweisendes Biegeorgan (3), dadurch gekennzeichnet, daß

a) die Halterung für das Biegeorgan (3) aus einer Schlittenführung (12) besteht, deren unterer Bereich parallel zur Ebene des abgewinkelten Platten-Randbereiches (2) ausgerichtet ist und die das Biegeorgan (3) führende Schlittenführung (12) an ihrem unteren Bereich (14) in Anpassung an den Biegewinkel des abzuwinkelnden Platten-Randbereiches (2) verstellbar ist, und

b) daß der Preßstempel (5) mit der Druckwalze (6) einteilig ausgebildet ist und mit einer Kolbenzylinderanordnung (18) ausgerüstet sind, die sich an dem wagenartigen Biegeorgan (3) abstützt.

4. Vorrichtung nach Anspruch 3, dadurch gekennzeichnet, daß auch der oberhalb der Ebene der zu biegenden Platte (1) befindliche Teil (15) des Schlittenführung (12) um eine parallel zur Ebene der zu biegenden Platte (1) gerichtete Achse (bei 23) verstellbar ist (Fig. 5).

5. Vorrichtung nach einem oder mehreren der vorhergehenden Ansprüche 3 und/oder 4, dadurch gekennzeichnet, daß sich das Biegeorgan (3) mittels Laufrollen (16) in einer Schienenführung der Schlittenführung (12) führt und mit einer Druckvorrichtung (bei 17) verbunden ist.

6. Vorrichtung nach einem oder mehreren der vorhergehenden Ansprüche 3 bis 5, dadurch gekennzeichnet, daß das wagenartige Biegeorgan (3) zusätzlich eine hydraulische Kolbenzylinderanordnung (19) trägt, die einerseits mit dem Preßstempel (5) verbunden ist und sich andererseits zur Beaufschlagung des Preßstempels (5) an einem von der Schlittenführung (12) getragenen Gegenlager (20) abstützen kann

7. Vorrichtung nach einem oder mehreren der vorhergehenden Ansprüche 3 bis 6, dadurch gekennzeichnet, daß die gebogene Gegenfläche in Form unterschiedliche Biegeradien aufweisender Einsatzstücke (21, 22) ausgebildet ist (Fig. 6 und 7).

## Claims

1. A process for hot-forming of a synthetic resin laminated plastics plate (1) assembled from several hot-formable duromer plastics-impregnated laminate layers, between which layers of a thermoplastic binder are inserted, in which process the plate is firstly brought to the forming temperature at least in its area to be formed and thereafter, in order to bend over a plate edge area (2), is bent round a curved counter-surface (4) with the aid of a movable bending member (3) coming into contact with said edge area, said bending occurring in such a way that the bending member (3) is in contact with the plate edge area (2) to be bent at least during part of the bending process and the plate (1) is then cooled, the bending member (3) holding the edge area (2) in its bent position after the bending process at least until the thermoplastic binder becomes rigid again, characterized in that the bending member (3) is so guided in the first phase of the bending process that it lies against the plate edge area (2) to be bent in the area of the curved counter-surface (4) pressing against the latter, in that an axis of pressure extending parallel to the curved counter-surface is generated on the plate edge area (2) to be bent and in that during the bending process this axis of pressure is conveyed over the plate edge area to be bent in the direction towards the free plate edge area (2) and in that only when the end position of the plate edge area (2) to be bent is reached is a punch (5) corresponding in size to the bent plate edge area pressed onto the bent plate edge area, which punch (5) loads the bent plate edge area (2) with pressure until the thermoplastic binder has rerigidified.

2. A process according to claim 1, characterized in that the axis of pressure to be applied to the plate edge area (2) to be bent is generated by a roller (6) connected to the bending member (3), which roller (6) may roll over the surface of the plate edge area (2) to be bent.

3. A device for bending heat-formable synthetic resin laminated plastics plates, comprising a clamping device (7) with flat clamping surfaces serving to hold firm the unformed plate, the lower flat clamping surface (9) merging via a curved counter-surface (4) into a curved counter pressure surface (10) opposite the lower clamping surface (9) as well as a bending member (3) comprising a pressure surface (11) and a roller (6) and mounted displaceably by means of a support, characterized in that

a) the support for the bending member (3) consists of a slide guide (12), whose lower area is oriented in parallel with the plane of the bent plate edge area (2) and the slide guide (12) guiding the bending member (3) is adjustable in its lower area (14) to as to be conformed to the bend angle of the plate edge area (2) to be bent and

b) the punch (5) and the roller (6) are constructed in one piece and are provided with a piston/cylinder arrangement (18) supported on the carriage-type bending member (3).

4. A device according to claim 3, characterized in that the part (15) of the slide guide (12) located above the plane of the plate (1) to be bent is also adjustable about an axis (at 23) oriented in parallel with the plane of the plate (1) to be bent (Fig 5).

5. A device according to either or both of the preceding claims 3 and/or 4, characterized in that the bendng member (3) is guided in a rail guide of the slide guide (12) by means of rollers (16) and is connected with a pressure device (at 17).

6. A device according to one or more of the preceding claims 3 to 5, characterized in that the carriage-type bending member (3) additionally carries a hydraulic piston/cylinder arrangement (19), which is connected on the one hand with the punch (5) and can be supported on the other hand for loading of the punch (5) on an end support (20) carried by the slide guide (12).

7. A device according to one or more of the preceding claims 3 to 6, characterized in that the curved counter-surface (4) is constructed in the form of insert pieces (21, 22) having different bending radii (Figs. 6 and 7).

## Revendications

1. Procédé de formage à chaud d'un panneau stratifié (1) en résine synthétique, qui est composé de plusieurs couches stratifiées déformables à chaud, imprégnées d'une résine synthétique thermodurcissable, entre lesquelles sont interposées des couches composées d'un liant thermoplastique, dans lequel procédé le panneau est tout d'abord porté à la température de formage, au moins dans sa zone à mettre en forme, après quoi, pour rabattre une région marginale (2) du panneau, ce panneau est plié autour d'une contre-surface formant un coude (4), à l'aide d'un organe de pliage mobile guidé (3), qui entre en contact avec cette zone marginale, par le fait que l'organe de pliage (3) est en contact avec la zone marginale (2) du panneau, du moins pendant une partie de l'opération de pliage, et le panneau (1) est ensuite refroidi, l'organe de pliage (3) maintenant la zone marginale (2) dans sa position pliée après l'opération de pliage, au moins jusqu'à la resolidification du liant thermoplastique, caractérisé en ce que, pendant la première phase de l'opération de pliage, l'organe de pliage (3) est guidé de manière à être appuyé contre la zone marginale (2) du panneau et en exerçant une pression contre ce panneau dans la zone de la contre-surface (4) formant un coude, en ce qu'on produit sur la zone marginale (2) du panneau une ligne de pression s'étendant parallèlement à la contre-surface formant un coude et pendant l'opération de pliage, cette ligne de pression se déplace sur la zone marginale (2) du panneau, en direction de celle-ci et, lorsque l'on atteint la position finale de la zone marginale (2), une plaque de pressage (5) correspondant en dimensions à ladite zone marginale est pressée sur celle-ci, ladite plaque de passage exerçant une pression sur ladite zone marginale (2) jusqu'à la resolidification du liant thermoplastique.

2. Procédé selon la revendication 1, caractérisé en ce que la ligne de pression qu'il s'agit de former sur la zone marginale (2) du panneau est produite par un rouleau en compression (6) solidaire de l'organe de pliage (3), qui peut rouler sur la surface de la zone marginale (2) du panneau.

3. Dispositif destiné à plier des panneaux stratifiés en résine synthétique déformables à chaud, qui comprend un dispositif de serrage (7) muni de surfaces de serrage planes, qui sert à immobiliser le panneau non déformé, la surface de serrage plane inférieure (9) se raccordant par une contre-surface formant un coude (4) à une surface de contre-pression (10) qui est coudée par rapport à la surface de serrage inférieure (9), ainsi qu'un organe de pliage (3) monté mobile par l'intermédiaire d'un support, et qui présente une surface de compression (11) et un rouleau de compression (6), caractérisé en ce que

a) le support recevant l'organe de pliage (3) est composé d'un guide de chariot (12) dont la région inférieure est orientée parallèlement au plan de la région marginale rabattue (2) du panneau, et le guide de chariot (12) qui guide l'organe de pliage (3) peut être réglé dans sa région inférieure (14) pour s'adapter à l'angle de pliage de la zone marginale (2) du panneau, et

b) la plaque de pressage (5) est solidaire du rouleau de compression (6) et est équipée d'un dispositif à piston et cylindre (18) qui prend appui contre l'organe de pliage (3) en forme de chariot.

4. Dispositif selon la revendication 3, caractérisé en ce que la partie (15) du guide de chariot (12) qui se trouve au-dessus du plan du panneau (1) à plier peut elle aussi se déplacer autour d'un axe (en 23) orienté parallèlement au plan du panneau (1) à plier (figure 5).

5. Dispositif selon l'une des revendications 3 ou 4, caractérisé en ce que l'organe de pliage (3) est guidé à l'aide de galets (16) dans un guidage à glissière du guide de chariot (12), et est relié à un dispositif de pression (en 17).

6. Dispositif selon l'une des revendications 3 à 5, caractérisé en ce que l'organe de pliage (3) en forme de chariot porte en supplément un dispositif hydraulique à piston-cylindre (19) qui, d'une part, est relié à la plaque de pressage (5) et, d'autre part, peut s'appuyer contre un appui (20) porté par le guide de chariot (12) pour solliciter la plaque de pressage (5).

7. Dispositif selon l'une des revendications 3 à 6, caractérisé en ce que la contre-surface (4) formant un coude est constituée par des garnitures (21,22) présentant différents rayons de pliage (figures 6 et 7).

Fig. 1

Fig. 2

Fig. 5

Fig. 6

Fig. 7

EP 0 392 047 B1